Europäisches Patentamt

European Patent Office

Office européen des brevets

(11) Publication number: **0 255 300**
**A2**

# EUROPEAN PATENT APPLICATION

(21) Application number: **87306563.5**

(22) Date of filing: **24.07.87**

(51) Int. Cl.4: **G01B 11/12** , **G01B 11/14** , **G01B 11/16** , **E21B 47/08**

(30) Priority: **29.07.86 AU 7176/86**

(43) Date of publication of application:
**03.02.88 Bulletin 88/05**

(84) Designated Contracting States:
**CH DE GB LI SE**

(71) Applicant: **UNISEARCH·LIMITED**
**221-227 Anzac Parade**
**Kensington New South Wales, 2033(AU)**

(72) Inventor: **Buckingham, Christopher**
**63 Collins Street Kensington**
**Perth Western Australia(AU)**
Inventor: **Blackwood, Ross, Dr.**
**49 Davis Avenue**
**Springwood New South Wales(AU)**

(74) Representative: **Smith, Norman Ian et al**
**F.J. CLEVELAND & COMPANY 40-43**
**Chancery Lane**
**London WC2A 1JQ(GB)**

(54) **High sensitivity strain detector.**

(57) A high sensitivity strain detector is provided for the measurement of strain in material surrounding a bore hole. The strain gauge acts to detect small changes in the diameter of the bore hole which might for instance be drilled in a rock wall face in order to determine its strain.

The detector includes a tubular housing (21) which is sized to fit neatly in a standard bore hole (23). Included in at least one transverse plane is a pair of coaxial probes (24) extending externally to the bore hole wall (23) and internally connected to overlapping glass plates (25) marked with diffraction gratings. The diffraction grating of each plate comprises a series of equally spaced parallel lines being slightly angled to the diffraction grating of the other plate. A light source (30) and line camera (31) are placed on opposite sides of the overlapping portions of the plates (25) so that Moire Fringes are detected at the line camera (31). The probes (24) are biassed outwardly so that the plates (25) will slide one relative to the other in response to diametric changes of the bore hole in the plane of the probes (24). The line camera (31) is connected to a suitable hardware package for processing the image of the Moire Fringes and thus obtain information related to the diametric change.

FIG. 3

## "HIGH SENSITIVITY STRAIN DETECTOR"

The present invention relates to an apparatus for detecting small changes in bore hole diameters so that a stress value may be calculated.

Previous to the present invention stress measurement involved the use of electrical strain gauges or mechanical or acoustical methods. The more favoured methods were strain gauges and devices utilising strain gauges are the C.S.I.R.O. hollow inclusion cell, the U.N.S.W. solid inclusion cell and the South African C.S.I.R. triaxial stress cell.

The C.S.I.R.O. inclusion cell is a hollow cell containing electrical resistance strain gauges. The U.N.S.W. inclusion cell is a solid cylinder with strain gauges in different configurations to that of the aforementioned C.S.I.R.O. device. The South African C.S.I.R. triaxial stress directly attaches strain gauges to a hole wall. A disadvantage of the C.S.I.R.O. and the U.N.S.W. apparatus is that both apparatus are glued onto a rock wall face. Under load they can creep with time. All of the aforementioned apparatus are susceptible to temperature change effects, with consequential changes in stress readings, i.e., a temperature change in the rock wall or in the device produces an expansion or contraction of the flexible plastic material of which the device is constructed. This change due to temperature change induces a response in the device which cannot be separated from what could be construed to be a change in stress. All of the aforementioned apparatus are susceptible to moisture on the rock wall in as much as it can inhibit the necessary gluing process and consequently can only be used once as they are inseparable from the rock after gluing in position.

A further apparatus used to measure changes in bore hole diameters is an IRAD gauge. Such an apparatus is installed directly in contact with the wall. It contains an electronically plucked vibrating wire and a change in diameter of the hole results in a change in length of the wire and a consequential change in vibration. The frequency of the vibrating wire can be calibrated so that any change in vibration can be directly interpreted as a change in stress. The IRAD gauge has a metal body which only allows partial bore hold deformation thus considerably reducing the accuracy of stress measurement. The IRAD gauge is not reliable in low strength rocks because it crushes the rock in contact with it.

Furthermore, the prior bore hold gauges with the exception of the IRAD gauge are usually encapsulated into epoxy resin within the bore holes. This is a sacrificial method and consequently the strain gauges are impossible to calibrate in the bore hole. As the prior art strain gauges operate at very low signal levels over a long period of time they are also vulnerable to signal noise and drift.

The present invention seeks to ameliorate at least some the deficiencies of the prior art.

Accordingly, the present invention can broadly be said to provide a bore hole measurement apparatus comprising a housing for insertion into a bore hole; a pair of substantially parallel diffraction grating plates at lease partially overlapping and secured internally of the housing in a manner allowing mutual relative translational movement; a light source positioned on a first side of the plates so as to provide light through at least a portion of the overlapping plates and thereby produce an image of Moire Fringes; a light receptor positioned on a second side of the plates, opposite the first side, within the image of the Moire Fringes and adapted to produce signals indicative of the image of the Moire Fringes; and movement transfer means including two sensing portions mutually opposed in a transverse plane externally of the housing, adapted to resiliently transversely move in response to diametric changes of the bore hole in said transverse plane and being cooperatively connected to the plates so that the plates relatively translate when the sensing portions transversely move.

Preferably the above described means for transferring the movement resulting from diametric changes of the bore hole includes two co-axial probes axially slidingly held within the housing, parallel to the plates, and being outwardly sprung, the external ends of the probes forming the sensing portions and extending a distance externally of the housing so as to engage the interior wall of the bore hole. Each of the probes, at its internal end, is rigidly attached to a respective one of the defraction grating plates.

The present invention will now be described in further detail with reference to the attached drawings, in which:-

Fig. 1 is a schematic illustration of Moire fringes;

Fig. 2 is an elevation of a sensor according to the present invention disposed within a bore hole.

Fig. 3 is a view on section III-III jof Fig. 2 revealing the arrangement of probes and transparent plates according to a preferred embodiment of the present invention;

Fig. 4 is an on section view IV-IV of Fig. 3.

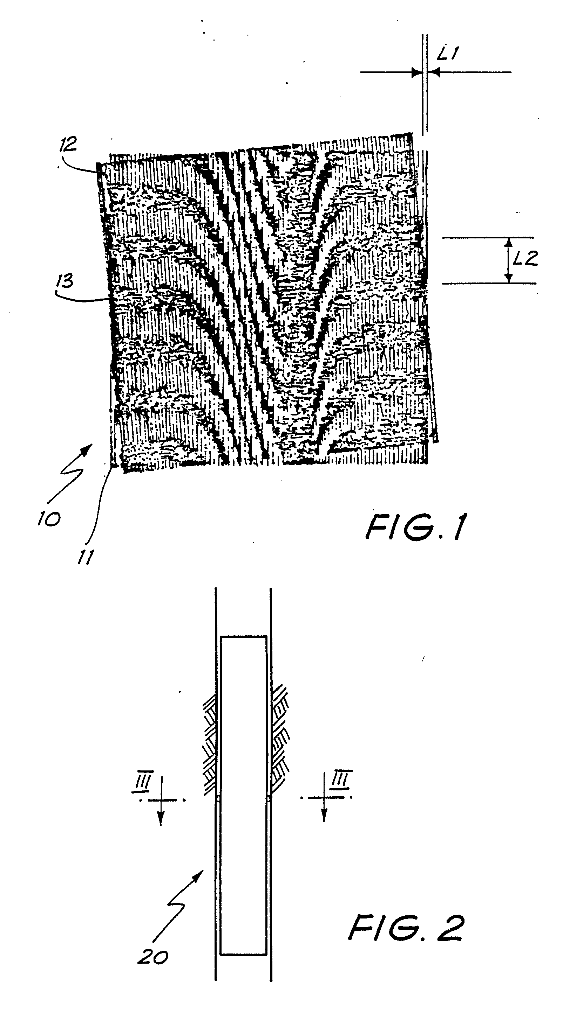

Referring now to Figure 1 it can be seen that where two sets of diffraction gratings are superimposed on each other such that one set of parallel lines is not parallel to the other set of parallel lines, a pattern known as Moire fringes, and generally designated by numeral 10, is produced.

A relatively dark zone exists where individual lines are adjacent to each other and a relatively light zone exists where individual lines intersect. If the first set of parallel lines 11, is moved to the right relative to the second set of lines 12, dark bands 13, will move downwards. A movement of distance L1 of the first set of parallel lines will cause a movement in the dark bands of a distance L2. Therefore, it can be seen that, as distance L2 is much larger than distance L1, any movement of the Moire fringes measured will correspond to much smaller relative movement between the sets of parallel lines. The relative movement of the two sets of parallel lines $\Delta$ L1 can be calculated from the formula $\Delta$

$$L1 = \Delta\ L2\ x\ \frac{L1}{L2}$$

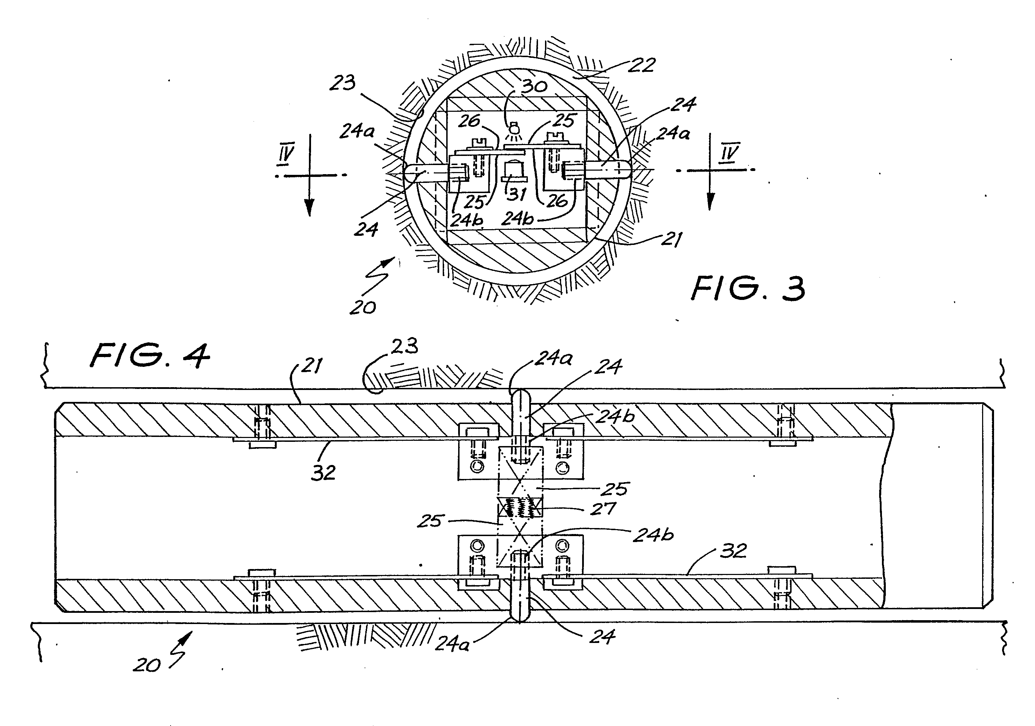

In Figs. 3 and 4 the sensor of a preferred embodiment of the present invention is illustrated and generally designated by numeral 20. A tubular housing 21 is shown disposed within a bore hold 22, said bore hole being defined by surface 23.

Co-axially aligned probes 24 are slidably engaged on opposite sides of the tubular housing 21. Each probe 24 has a first end 24a extending outside said housing and a second end 24b extending inside said housing. A pair of parallel glass plates 25 each having one surface 26 marked with a diffraction grating comprising a series of equally spaced parallel lines (not shown) are each attached to the second end 24b of a respective probe 24. The marked surfaces 26 are at least partly overlapping, the interaction of said two sets of parallel lines producing Moire fringes 27 running generally in the same direction of the longitudinal axis of the probes 24. A light source 30 is located on one side of the overlapping parts of the plates 25 and a line camera 31 is located on the other side. A first microprocessor (not shown) is interfaced with the line camera 31 to control the operation of said line camera and to receive data provided therefrom analyse said data and to transmit information regarding the spacing of and movement of said Moire fringes to a second microprocessor (also not shown) for calculation of probe movement and display of the result. Spring means 32 act to urge the probes 24 to extend outside the housing 21. This will ensure that the probes 24 are kept in contact with the surface 23 which defines the bore hole.

In the present embodiment glass plates have fine parallel lines drawn on them photographically at spacings of 25.4 micrometres (1000th of an inch), the lines being formed of silver halide material deposited on a plate surface. Consequently, a lubricant is provided on the surface of the plates to extend the life of the lines drawn thereon by reducing friction and resultant wear caused by the lines of silver halide deposits dragging across each other as the plates move. The lubricant also fills what would otherwise be a microscopic gap between the plate surfaces and, if said lubricant is selected with a refractive index similar to that of glass, internal reflection between the plates can be eliminated thus improving the clarity of the Moire fringes.

The line camera of the present embodiment comprises a 256 pixel CCD of which 128 pixels are used. The CCD is driven by a single chip microprocessor. The CCD requires three clock inputs; a transport clock for taking the charge to the output, a reset clock for refreshing the charge and an exposure clock that defines the time between scans of the CCD. These clocks are supplied through drivers from the microprocessor chip. The serial output of the CCD is seen as an analogue voltage change as the clocks are pulsed. The individual pixel charge is seen as a voltage level superimposed onto the clock pulses. As the CCD is being clocked precisely by the microprocessor chip the value of each pixel is read by its position relative to the first exposure pulse. The value of each pixel is individually converted to digital data by an analogue/digital converter, read by the microprocessor and temporarily stored. When the scan of 128 pixels is complete the microprocessor sends an analysis of the fringe spacing and movement derived from scan via a serial port to a receiver.

In use a pulsed infrared light emitting diode shines a thin beam through the overlapping part of the transparent plates 25. The Moire fringes 27 are detected by the line camera 31 which is manipulated in conjunction with said analogue/digital converter to provide digital data indicating the positions of the fringes to 1 pixel resolution. This digital data is then transmitted to a receiver for calculation of probe movement and display.

Digital data may be transmitted to said receiver either by a simple physical link such as wiring but may also be transmitted in the form of an infra-red signal so as to reduce noise distortion of the signal. The second microprocessor of the receiver analyses the transmitted data to find the spacing of the Moire fringe bands, to measure movements in the Moire fringes and to calculate therefrom the relative movement of the probes. If desired, the calculated relative movements can be shown on a digital or dot matrix display.

As the spacings between fringes correspond to the distance between two parallel lines, clearly the precision of the present invention is dependent on the distance L1 between the parallel lines, the number of fringes formed and the pixel size of the line camera. Based on line spacings of 25.4 micrometres, a limit of 1.5 to 3 fringe bands and a line camera in the form of a commercially available CCD, precision to within one-third of a micrometre of relative movement is possible.

The present invention has been described in relation to a single set of probes but it will be realised that a plurality of sets of probes disposed at varying positions and orientations can be employed to provide a more complete picture of bore hole deformation. Also, although the invention has been described with reference to a preferred embodiment, the present invention is not limited to the embodiment described and numerous variations, modifications or alternatives may be substituted for specifically described features without departing from the spirit or scope of the present invention.

For example, the relative axial movement of the probes can be obtained in a manner other than by the sliding engagement of the probes within the housing. Pivoted levers or a resilient housing with external nodes engaging the surrounding bore hole wall could be envisaged as possible alternatives.

## Claims

1. A bore hole measurement apparatus comprising a housing for insertion into a bore hole; a pair of substantially parallel diffraction grating plates at least partially overlapping and secured internally of the housing in a manner allowing mutual relative translational movement; a light source positioned on a first side of the plates so as to provide light through at least a portion of the overlapping plates and thereby produce an image of Moire Fringes; a light receptor positioned on a second side of the plates, opposite the first side, within the image of the Moire Fringes and adapted to produce signals indicative of the image of the Moire Fringes; and movement transfer means including two sensing portions mutually opposed in a transverse plane externally of the housing, adapted to resiliently transversely move in response to diametric changes of the bore hole in said transverse plane and being cooperatively connected to the plates so that the plates relatively translate when the sensing portions transversely move.

2. An apparatus as defined in claim 1 wherein the movement transfer means includes two co-axial probes axially slidingly held within the housing parallel to the plates and being outwardly biassed, each respective said sensing portion being at an external end of a respective probe and extending a distance externally of the housing, and each respective probe being rigidly attached at its internal end to a respective plate.

3. Apparatus as defined in claim 1 wherein the light source is an infra-red light emitting diode (termed LED herein).

4. An apparatus as defined in claim 1 wherein the light sensor is a charged couple device (termed CCD herein) driven by a control processor and operating as a line camera of a high plurality of pixels resolution such that the processor conducts a scanning operation in which the plurality of pixels are individually serially connected for a predetermined time period to the control processor which produces resultant signals dependent on the relative brightness of the image at each respective pixel for at least selected periodic scanning operations.

5. Apparatus as defined in claim 4 wherein the light source is an infra-red LED flashed on by the control processor for the time period associated with each pixel's connection to the processor.

6. A system for analysing a bore hole diameter comprising apparatus as defined in claim 5 connected, so as to transfer said resultant signals, to an analysing processor adapted to produce an output dependent upon the position of said image relative to said CCD.

7. A system as defined in claim 6 wherein the output is a visual display of the Moire fringes on a cathode ray tube (termed CRT herein).

8. A system as defined in claim 6 wherein the output is a visual display of changes in position of the image relative to the CCD over a period corresponding to a number of said scanning operations.

9. A system including a plurality of apparatus of claim 5, the transverse planes of the respective apparatus being equally angularly spaced one from another.

10. Apparatus as defined in claim 5 wherein the plates are separated by a thin film of lubricant of a refractive index approximately equal to the refractive index of the material of the plates.

11. Apparatus as defined in claim 5 wherein the resultant signals are carried by an infra-red light beam.

L1

12

13

L2

10

11

FIG.1

III

III

20

FIG.2

FIG. 3

FIG. 4

0 255 300